# DEMANDE DE BREVET EUROPEEN

(11) **EP 1 117 234 A1**
(43) Date de publication de la demande: **18.07.2001**
(21) Numéro de dépôt: 01400082.2
(22) Date de dépôt: 12.01.2001
(51) Int. Cl.: H04M 1/725, H04Q 7/32

(54) **Réseau de modules de communication et modules de communication élémentaire, portable et fixe**

(30) Priorité: 13.01.2000 FR 0000381
(71) Demandeur: SAGEM SA, 75116 Paris (FR)
(72) Inventeur: Charbonnier, Philippe, 78600 Le Mesnil le Roi (FR)
(74) Mandataire: Bloch, Gérard

(57) **Abrégé**

Des modules de communication d'élaborations diverses et le réseau de tels modules.

Un module se définit d'abord à l'égard de
- ses moyens ergonomiques (moyens dactylovisuels, moyens acoustiques, moyens manuels classiques)
- ses moyens de communication avec des réseaux de transmission extérieurs (réseaux téléphoniques, réseaux informatiques, réseaux de radiodiffusion)
- ses moyens énergétiques (le secteur, les batteries rechargeables)
- ses moyens applicatifs (moyens internes au module, des moyens externes mais périphériques, des moyens externes et distants)
- son encombrement,
tous ces moyens et autres caractéristiques du module étant naturellement liés entre eux.

## Description

Les utilisateurs de téléphones cellulaires sont de plus en plus exigeants, veulent de plus en plus de choses et les constructeurs se prêtent volontiers à pareille exigence.

Des limites existent toutefois, qui sont l'énergie disponible, l'encombrement et l'interface de relation homme-machine RHM.

On ne peut pas aujourd'hui équiper les téléphones cellulaires de l'interface RHM sophistiquée qui conviendrait pour exploiter tous les applicatifs bureautiques et multimedia.

C'est ainsi que la demanderesse propose le concept inventif décrit et revendiqué ci-après, concernant des modules de communication d'élaborations diverses et le réseau de tels modules.

Un module se définit d'abord à l'égard de
- ses moyens ergonomiques,
- ses moyens de communication avec des réseaux de transmission extérieurs,
- ses moyens énergétiques,
- ses moyens applicatifs,
- son encombrement,
tous ces moyens et autres caractéristiques du module étant naturellement liés entre eux.

Comme moyens ergonomiques, on citera, par exemple,
- des moyens dactylovisuels (écran, pupitre, stylet/écran tactile),
- des moyens acoustiques (microphone, haut-parleur, dispositif de reconnaissance vocale, synthétiseur vocal), sans parler
- des moyens manuels classiques.

Comme réseaux extérieurs, on citera, par exemple, les réseaux téléphoniques, les réseaux informatiques, les réseaux de radiodiffusion.

Comme moyens énergétiques, on citera le secteur, les batteries rechargeables, y compris les batteries solaires, les piles chimiques et accélérométriques.

Comme moyens applicatifs, on considèrera les moyens internes au module, des moyens externes mais périphériques, des moyens externes et distants.

Comme moyens applicatifs internes, on citera des moyens mémoires pour saisie et lecture de messages.

Comme moyens applicatifs périphériques, on citera les imprimantes, les équipements multimédia, les équipements de navigation.

Comme moyens applicatifs distants, on citera les équipements domotiques et personnels, comme les équipements électroménagers et les voitures.

### Le module élémentaire

Il n'est pourvu que de moyens ergonomiques acoustiques, ses capacités énergétiques sont très réduites et son encombrement est particulièrement faible, c'est un module miniature, un module de poche. Le reste de ses moyens en découle.

### Moyens ergonomiques

Il ne possède qu'un écouteur (haut-parleur), un microphone et un dispositif de commande vocale.

### Encombrement

Son encombrement est tel qu'on peut le porter sur soi en permanence, même sous forme de bracelet ou de collier, ou l'accrocher chez soi ou dans sa voiture, par exemple au pare-soleil.

### Moyens applicatifs

Ses seuls moyens applicatifs internes, s'ils existent, sont des moyens de téléphonie auxquels on peut adjoindre des moyens de messagerie, de réception de signaux de radiodiffusion, ....

### Communication avec les réseaux de transmission extérieurs

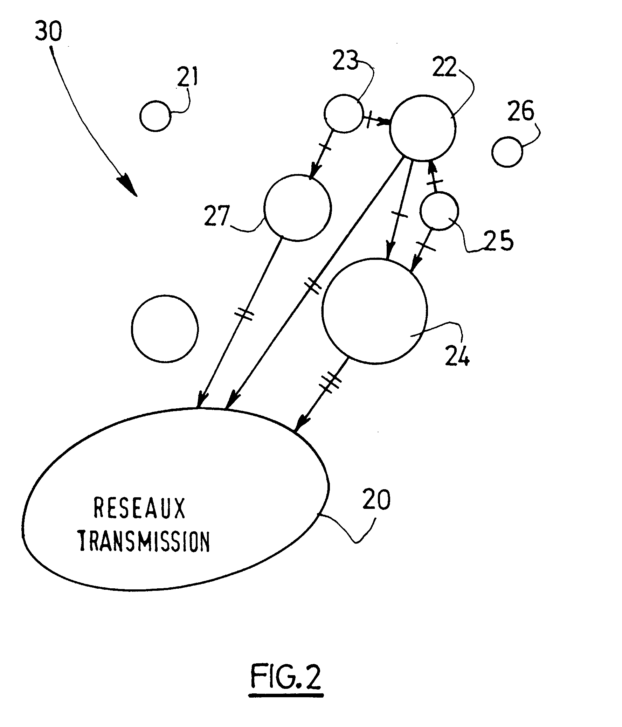

En indirect, par l'intermédiaire d'une interface interne à courte portée (lien fléché barré d'un trait sur la figure 2), d'une part, et d'un autre module de capacités supérieures, d'autre part, il peut accéder à des réseaux extérieurs et à tous les moyens applicatifs de cet autre module. Dans ces circonstances, le module élémentaire est alors maître pour la téléphonie ordinaire et peut transférer son autorité à l'autre module pour des applications de téléphonie plus élaborées ou de communications sophistiquées devenant ainsi module secondaire pour ledit autre module.

En direct, et en ce qui concerne les réseaux extérieurs, il peut recevoir des signaux de radiodiffusion et, en variante, accéder aussi à un réseau de radiotéléphonie cellulaire.

Les modules élémentaires miniatures ici considérés peuvent ainsi prendre la forme, par exemple,
- d'un téléphone cellulaire sans clavier, de faible puissance,
- d'un ensemble micro-casque sans fil,
- d'un combiné, toujours sans clavier, d'une base DECT de téléphonie sans fil, etc...

De façon générale, un module élémentaire miniature est donc
- un module émetteur maître de commande vocale d'un autre module de capacités supérieures,
- un module émetteur-récepteur secondaire, périphérique dudit autre module pour accéder à ses moyens
   applicatifs et aux réseaux extérieurs,
   accessoirement
- un module récepteur de radiodiffusion,
- un module émetteur-récepteur de radiotéléphonie cellulaire de faible puissance,
- un module avec d'uniques moyens applicatifs de messagerie.

### Le module portable

C'est un module beaucoup plus élaboré qui, bien que pouvant parfois rester un module de poche, est plus généralement un module mallette ou attaché-case, voire même un module voiture ou un module borne de voie publique. Ses ressources énergétiques sont importantes.

### Moyens ergonomiques

En plus de ceux du module élémentaire, il possède aussi des moyens dactylovisuels et manuels.

### Moyens applicatifs

Il peut posséder quasiment tous les moyens applicatifs possibles, directement ou indirectement, à commencer par ceux d'une imprimante, y compris ceux d'un ordinateur personnel, d'un poste de radiotéléphonie, d'un équipement de localisation, d'un équipement de navigation, d'un visiophone. Il n'accède aux applicatifs distants domotiques que par l'intermédiaire d'un module fixe encore plus élaboré. Ces moyens applicatifs sont facilement évolutifs.

### Communication avec les réseaux extérieurs

Il est pourvu des moyens lui permettant d'accéder par radio à tout réseau extérieur, comprenant une interface longue distance avec ce réseau (lien fléché barré de deux traits sur la figure 2).

De façon générale, un module élaboré portable est un module émetteur-récepteur à la fois maître et secondaire à l'égard d'un autre module, élémentaire ou encore plus élaboré, auquel il peut être relié par une interface interne à courte portée.

### Le module fixe

Il est très semblable au module portable. Etant fixe, il dispose d'énergie illimitée et accède directement par radio et/ou par fil par une interface fixe (lien fléché barré de trois traits sur la figure 2), à tout réseau extérieur, et notamment le réseau à intégration de services RNIS, les réseaux cablés, les réseaux de zône locaux (LAN), les liens radio haut débit, etc.

Naturellement dépourvu d'équipements de localisation et de navigation, il possède, par contre, des applicatifs de commande d'équipements et de machines domotiques et personnels.

De façon générale, un module fixe est un module émetteur-récepteur à la fois maître et secondaire à l'égard d'un autre module, élémentaire ou portable, auquel il peut être relié par une interface interne à courte portée.

De façon encore plus générale, les modules élémentaires, portables et fixes constituent un réseau modulaire hiérarchisé, chaque paire de modules d'élaborations différentes étant soumise à une double hiérarchie montante et descendante.

L'un des principaux avantages de cette double structure hiérarchique de réseau doit être rapidement souligné.

Grâce à la structure hiérarchique présentée ci-dessus, le module élémentaire, en l'occurence un module téléphonique, est facile à porter et possède une interface RHM rudimentaire, voire minimale, le module mallette, relié au module élémentaire, contenant le surplus : l'interface RHM sophistiquée, les accès aux réseaux, les moyens énergétiques. Mais l'interface RHM du module élémentaire présente la caractéristique d'être monolocuteur et donc l'avantage d'être performant pour celui qui le porte.

Dans sa version minimale, le module élémentaire miniature, qui ne sert directement qu'à la téléphonie, ne fonctionne qu'à proximité d'un module portable, fermé ou ouvert s'il s'agit d'une mallette, ce qui peut être facilement le cas, sans affecter la sensation de liberté de mouvement. Pour des applications bureautiques et multimedia, il suffit d'ouvrir le module portable.

Dans sa version autonome, le module élémentaire miniature, lorsqu'il sera à proximité d'un module portable, pourra néanmoins accéder aux réseaux téléphoniques automatiquement par l'intermédiaire du module portable pour économiser son énergie.

Avantageusement, il peut être prévu dans les modules de communication des moyens applicatifs de téléphonie agencés pour, en cours de communication et via un lien à courte portée, coopérer avec des moyens applicatifs de téléphonie d'un autre module de communication d'élaboration différente et déterminer qu'une substitution d'accès est possible et/ou souhaitable.

Dans ce cas, il est préférable que, ayant acquis les paramètres d'une communication d'un autre module d'élaboration différente avec un réseau extérieur, les moyens applicatifs de téléphonie soient agencés pour émettre en superposition audit autre module avant de s'y substituer.

De préférence encore, les moyens applicatifs de téléphonie sont agencés pour, afin de procéder à la substitution, émettre en superposition en TD/CDMA.

L'invention sera mieux comprise à l'aide de la description suivante et du dessin annexé, sur lequel
- la figure 1 représente les trois strates de l'interface interne à courte portée schématisées par blocs et
- la figure 2 illustre un réseau de modules élémentaires, portables et fixes de l'invention.

### L'interface interne à courte portée

Elle comporte une strate ergonomie, une strate activation et une strate énergie.

### Strate ergonomie

Il y passe des informations relatives à l'homme, c'est-à-dire les événements de l'interface homme-machine (RHM), comme le signal audio du microphone ou destiné au haut-parleur, les signaux d'écran ou de stimulation de pupitre quand il y en a.

L'interface interne courte portée peut supporter un compactage préalable des informations par vocodage de commandes vocales ou à travers un dispositif de reconnaissance vocale. En cas de vocodage, le lien courte portée transmet le signal vocal non interprété codé de façon plus ou moins compacte. En cas de reconnaissance vocale, le lien courte portée transmet la signification de la parole, qui est encore bien plus compacte.

Ainsi, et dans le cadre par exemple de la commande d'un module fixe par un module élémentaire,
- pour une application téléphonie,
   la reconnaissance vocale sera mise en oeuvre dans le module élémentaire bien adapté à la voix de son opérateur,
- pour une application domotique inconnue du module élémentaire, la reconnaissance vocale sera mise en oeuvre dans le module fixe, qui est plus puissant et polylocuteur, les signaux vocaux du module élémentaire étant vocodés (normes de l'Union Internationale des Télécommunications G711, G723...).

Pour une application domotique, à partir d'un module portable d'un tiers non habitué à la voix de l'opérateur du module élémentaire considéré, on procède de la même manière, avec une reconnaissance vocale dans le module fixe.

### Strate actuation

Il y passe des informations relatives aux moyens applicatifs périphériques et distants, par exemple pour l'impression de fichiers, la commande de machines.

### Strate énergie

Il y passe l'énergie de fonctionnement ou de rechargement du module par un module plus puissant et élaboré.

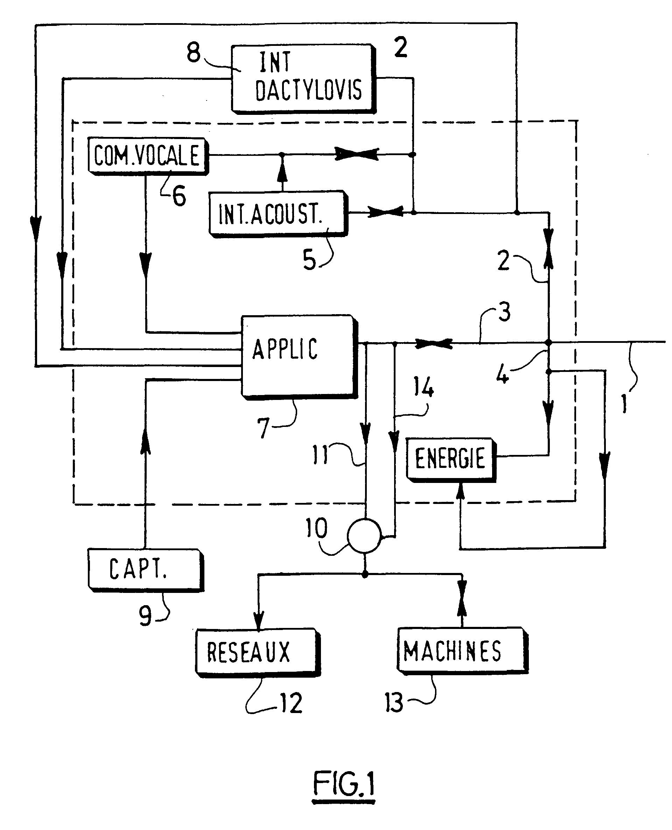

Sur la figure 1, les fonctionnalités du module élémentaire sont représentées à l'intérieur du cadre en tirets.

Le lien, ou médium, courte portée 1 se divise en un lien ergonomie 2, un lien actuation 3 et un lien énergie 4.

### • Lien ergonomie

L'interface acoustique 5, légère dans un module élémentaire, de confort dans un module portable ou fixe, transmet les informations du microphone et reçoit les informations pour le haut-parleur. Elle alimente la commande vocale 6 qui peut être aussi alimentée par un autre module du réseau.

La commande vocale 6 contrôle des applications 7 de son module ou des applications d'un autre module.

Dans un module plus élaboré qu'un module élémentaire, une interface dactylovisuelle 8 fonctionne en parallèle sur l'interface acoustique et la commande vocale.

### • Lien actuation

Les applications transmettent leurs commandes par ce lien et reçoivent en retour, par ce lien, des états.

Avec un module élémentaire, on ne peut que préparer des messages, recevoir des signaux de radiodiffusion et, dans certains cas comme évoqué plus haut, aussi téléphoner. Comme on l'a vu plus haut, avec un module plus élaboré, on peut envisager, non seulement la téléphonie, mais aussi des applications multimedia, bureautiques, de navigation et de localisation et, avec un module fixe, des applications domotiques.

Les applications peuvent être alimentées par des capteurs 9, capteurs de navigation et de localisation pour un module mobile, capteurs domotiques pour un module fixe.

Avec les modules plus élaborés qu'un module élémentaire, au travers d'un circulateur 10, on accède (11) aux réseaux extérieurs, par une interface 12 longue distance (radio conventionnelle d'aujourd'hui ou radio IMT 2000) avec un module mobile, interface fixe avec un module fixe, ainsi qu'aux machines 13, avec un module fixe. Inversement, l'accessibilité aux réseaux d'actuation des machines peut être obtenue (14) par des applications d'autres modules au travers du circulateur 10.

### • Lien énergie

Le lien énergie est unidirectionnel dans un module élémentaire, c'est un lien de rechargement. Il est bidirectionnel dans les modules plus élaborés.

L'interface interne à courte portée utilise un medium permettant le transport, en multiplexage, des informations des strates ergonomie et actuation. Il peut s'agir d'un lien radio LAN en mode paquet, d'un lien DECT, d'un lien IMT 2000, d'un lien Bluetooth, ...

En ce qui concerne la strate énergie, elle utilise des connecteurs à contacts métalliques ou l'induction à très courte distance.

Diverses technologies sont utilisables en couches basses, normalisées ou non, de l'interface interne à courte portée. Elles se ramènent toutes à partager un médium entre plusieurs appareils en mode paquet, en mode circuit ou les deux.

En l'espèce, on utilise le mode paquet pour la strate actuation et la signalisation de la strate ergonomie et le mode circuit pour les signaux audio de la strate ergonomie. Cependant, à l'instar de la téléphonie sur l'Internet, on peut aussi passer les signaux audio en mode paquet si la méthode d'accès au medium assure, de façon déterministe ou statistique, un retard faible et pas trop fluctuant.

### Couches 1,2

En mode paquet, les unités de données sont des datagrammes contenant une identification des entités émettrice et destinatrice et une information utile qui est une donnée de couche 3. Ces datagrammes sont émis, et réémis en cas de collision, selon une procédure d'accès au médium (par exemple procédure de RLAN).

En mode circuit, un tuyau point à point est ouvert entre les deux entités. En multiplexage régulier, on y fait passer une voie de données transparente (canal B) et une voie de commande (canal D); une procédure de répétition (sur canal D, parfois aussi sur canal B) peut récupérer les erreurs (par exemple procédure DECT).

### Couche 3

Les unités de données de couche 3 véhiculent des commandes de couche 3 ou des entités de données d'application. Le codage permet à l'entité réceptrice de savoir de quoi il s'agit. En mode paquet, la couche 3 confie ses unités de données indistinctivement à la couche 2. En mode circuit, elle les confie au canal B ou D; généralement, les commandes de couche 3 et les applications à faible quantité de données (messagerie, commande de machines) sont confiées au canal D et les applications à grande quantité de données (audio, bureautique) passent sur le canal B.

Les automates de couche 3 contiennent en outre des procédures pour gérer la mobilité et les droits d'accès : les différents modules suivent la dégradation ou le renforcement du lien courte portée, l'apparition ou la disparition d'autres modules et reconnaissent les modules amis dont ils peuvent utiliser les capacités ou recevoir des demandes.

### Couche application

Les applications s'échangent des unités de données d'un module à l'autre, en multiplexage sur le médium à courte portée, chaque unité contenant dans son codage une distinction des différentes applications. Les unités de données sont des commandes d'application ou des données. La primitive vers la couche 3 comporte explicitement ou implicitement une indication de qualité de service requise à faire passer sur le canal D ou sur le canal B, ou en mode paquet avec retard maîtrisé.Une primitive est l'ensemble de données transmis à une couche déterminée par une couche de rang immédiatement supérieur ou inférieur, selon qu'il s'agit d'émission ou de réception.

Le réseau de modules élémentaires, portables et fixes de la figure 2 peut accéder à un ensemble de réseaux extérieurs 20, permettant aux modules moins élaborés d'utiliser les capacités de modules plus élaborés quand ils sont à leur portée.

Seul avec un module élémentaire miniature 21, on ne peut que préparer des messages ou écouter la radiodiffusion, éventuellement téléphoner.

A proximité d'un module portable 22, on peut, depuis un module élémentaire miniature 23, faire de la téléphonie ou de la messagerie en utilisant l'application du module miniature 22, la strate actuation vers le module portable 22 et l'accès réseau externe du module portable 22 (solution 1) ou bien, depuis le module miniature 23, utiliser la strate ergonomie vers le module portable 22, l'application téléphonie du module portable 22 et l'accès réseau du module portable 22 (solution 2). On choisit une solution ou l'autre selon les particularités des applications qui conviennent (le répertoire téléphonique de l'une ou de l'autre par exemple). On choisit de même l'ergonomie du module qui convient le mieux : étant à proximité du module portable, on peut décider d'utiliser l'interface acoustique (commode) du module miniature 23, ou choisir finalement de ne pas l'utiliser et lui préférer celui (de meileure qualité) du module portable 22, auquel cas le module miniature 23 n'est pas du tout utilisé.

A proximité d'un module fixe 24, depuis un module élémentaire 25, on procède de la même manière.

Plusieurs modules élémentaires 23, 25, 26 peuvent être associés à un même module portable 22 et, inversement, on peut associer un module élémentaire 23 à plusieurs modules portables 22, 27, sous réserve d'une même interface interne et d'une reconnaissance mutuelle par une procédure d'enregistrement préalable.

On retrouve la même hiérarchie entre les modules élémentaires et fixes, d'une part, et les modules portables et fixes, d'autre part. Dans tous ces cas, il y a partage du médium courte portée par les interfaces internes.

Cette faculté d'association variable peut être contrôlée manuellement ou automatiquement. On pourra envisager aussi un contrôle semi-automatique, détecter les choix possibles, les proposer à l'opérateur avec une indication des meilleures solutions à retenir en fonction de critères prédéterminés.

### EXEMPLE

Un opérateur dispose d'un module élémentaire avec un bloc de radiotéléphonie et lance un appel téléphonique. Le module élémentaire constate qu'il est à courte portée d'un module portable et d'un module fixe. L'application téléphonie, compte-tenu que i) le module élémentaire dispose d'un accès de radiotéléphonie propre mais qu'il faut épargner sa batterie, ii) le module fixe rapporte par exemple que sa ligne filaire est actuellement occupée et iii) le module portable rapporte que son accès radiotéléphonique est disponible, décide (association automatique) ou propose (association semi-automatique) que l'appel s'effectue par le module portable.

On notera que le partage de rôles peut évoluer en cours d'action par
- substitution d'accès,
- substitution de RHM.

### Substitution d'accès

En communication GSM sur son module portable, on approche de chez soi. Le lien à courte portée s'établit entre son module portable et son module fixe domestique. L'application téléphonie répartie entre les deux et coopérant via le lien à courte portée 1 détermine qu'une substitution d'accès est possible (la ligne RTC est disponible) et souhaitable (meilleurs tarif et qualité).

A titre d'exemple, par une RHM vocale, l'application de téléphonie prévient automatiquement les deux interlocuteurs : "patientiez quelques secondes". Elle demande le transfert par signalisation GSM indiquant le numéro filaire. La communication en cours est mise en garde, le réseau appelle le numéro téléphonique RTC. L'application téléphonie fait immédiatement décrocher la ligne filaire dès qu'elle sonne (avantageusement, elle vérifie que c'est bien le bon appelant au moyen du service d'identification de l'appelant par le réseau). Par signalisation GSM, elle fait raccrocher l'accès GSM. Elle met en relation la RHM du module portable (micro écouteur, commandes) avec l'accès réseau filaire du module fixe. On poursuit la communication sur le module portable, mais via le lien courte portée et l'accès RTC.

Inversement, on a, chez soi, entamé une communication RTC depuis son module portable via le lien courte portée. On s'éloigne de la maison. Constatant la baisse de signal du lien à courte portée, l'application téléphonie évalue qu'une substitution d'accès est souhaitable et possible (l'accès GSM est disponible). Elle prévient et.demande le transfert au RTC (R + No de l'accès GSM). Elle décroche sur l'accès GSM dès qu'il sonne, ordonne à l'accès RTC de raccrocher et met en relation l'interface acoustique et de commande du module portable avec l'accès GSM.

De même, si on est en conversation IMT 2 000 directement depuis un module élémentaire qu'on porte sur soi, qu'on s'approche de sa voiture, qui est équipée d'un module portable disposant de plus de réserve d'énergie, dès que le lien courte distance s'établit entre eux, l'application téléphonie évalue qu'une substitution d'accès est souhaitable (pour économiser l'énergie du module élémentaire) et possible (l'accès réseau du module portable est disponible et fonctionne sur le même abonnement SIM dédoublé).

Via le lien courte distance, le module élémentaire passe au module portable les paramètres de la communication en cours : fréquence, numéro de trame TDMA, code CDMA, référence temporelle approximative du début du tramage et du code. Le module portable s'accroche au réseau et affine sa synchronisation. Il émet en TD/CDMA en superposition au module élémentaire. Le récepteur du réseau reçoit correctement cette superposition, du fait qu'il utilise un récepteur en rateau et que celui-ci voit une superposition comme un simple écho supplémentaire. La RHM du module élémentaire est mise en relation avec l'accès réseau du module portable via le lien courte portée. Lorsque le module portable signale qu'il a bien pris le relais, l'accès réseau du module élémentaire est coupé.

On poursuit la conversation sur la RHM du modèle élémentaire mais elle passe par le lien courte distance et l'accès réseau du module portable.

Ensuite, on peut décider de commuter de RHM et passer sur celle du module portable (main libre dans le rétroviseur par exemple). Le module élémentaire et le lien courte distance n'interviennent alors plus.

### Procédure d'enregistrement

L'utilisateur approche un module vierge d'enregistrement d'un module déjà enregistré et fait une manipulation entre les deux. Les appareils s'échangent des signalisations comportant une identité de groupe. Les appareils se reconnaissent alors comme éléments du même groupe. Des éléments cryptologiques peuvent s'y ajouter, mais l'authentification de départ est le fait que l'utilisateur agit sur le module déjà enregistré.

Le module de départ (un module fixe typiquement) définit une identité de groupe, qu'on rend unique, en se basant sur son identité de fabriquant et le numéro de série, par exemple. Lorsqu'on enregistre d'autres modules dessus, ils deviennent détenteurs de cette identité de groupe, peuvent se l'indiquer l'un à l'autre et fonctionner entre eux directement.

L'identité de groupe doit être unique parce qu'un module portable peut être enregistré sur plusieurs modules fixes (maison, bureau) et il ne faut pas qu'ils aient fortuitement la même identité de groupe.

## Revendications

1. Réseau (30) de modules de communication permettant d'accéder à des réseaux de transmission extérieurs (20), caractérisé par le fait qu'il est un réseau modulaire hiérarchisé, chaque paire de modules d'élaborations différentes (22, 23; 22, 25; 27, 23; 24, 25; 24, 22) étant soumise à une double hiérarchie montante et descendante.

2. Module de communication pour un réseau (30) selon la revendication 1, caractérisé par le fait qu'il comporte des moyens pour l'associer à au moins un autre module du réseau, comprenant une interface interne à courte portée agencée pour partager le médium courte portée avec l'interface dudit autre module.

3. Module de communication selon la revendication 2, dans lequel il est prévu des moyens d'optimisation d'association, pour commander les moyens d'association, comprenant des moyens manuels et des moyens automatiques.

4. Module de communication selon l'une des revendications 2 et 3, dans lequel l'interface interne à courte portée comprend une strate ergonomie, une strate actuation et une strate énergie, la strate ergonomie étant agencée pour effectuer de la reconnaissance vocale et du vocodage de la parole.

5. Module selon la revendication 4, dans lequel les informations des strates ergonomie et actuation de l'interface interne de courte portée sont multiplexées.

6. Module selon l'une des revendications 4 et 5, dans lequel la strate ergonomie de l'interface interne à courte portée est associée à la strate actuation de l'interface interne à courte portée d'un module associé.

7. Module de communication élémentaire (23) destiné à accéder à au moins un réseau de transmission extérieur (20), comprenant des moyens ergonomiques, des moyens applicatifs, des moyens énergétiques et des moyens de communication avec le réseau de transmission (20),
caractérisé par le fait que les moyens de communication comprennent une interface interne à courte portée pour communiquer indirectement avec le réseau de transmission (20) par l'intermédiaire d'au moins un module de communication plus élaboré (22, 24; 27).

8. Module élémentaire selon la revendication 7, dans lequel les moyens ergonomiques sont des moyens exclusivement acoustiques.

9. Module élémentaire selon l'une des revendications 7 et 8, dans lequel les moyens applicatifs sont constitués exclusivement de moyens de messagerie.

10. Module élémentaire selon l'une des revendications 7 à 9, qui est un module émetteur maître de commande vocale du module plus élaboré.

11. Module élémentaire selon l'une des revendications 7 à 10, qui est un module émetteur-récepteur secondaire périphérique du module plus élaboré.

12. Module de communication portable (22) destiné à permettre à un module élémentaire (23), selon l'une des revendications 7 à 11, d'accéder à au moins un réseau de tranmission extérieur (20), comprenant des moyens ergonomiques dactylovisuels et une interface de communication à longue distance pour communication avec le réseau de transmission extérieur.

13. Module portable (22) selon la revendication 12, qui est un module émetteur-récepteur maître et secondaire à l'égard d'un autre module, élémentaire (23) ou plus élaboré (24), auquel il peut être relié par l'interface interne de communication à courte portée.

14. Module de communication fixe (24) comprenant des moyens ergonomiques, applicatifs et de communication semblables à ceux du module portable (22) selon l'une des revendications 12 et 13, les moyens applicatifs comprenant des moyens de commande d'équipements et de machines domotiques et personnels et il est prévu une interface de communication fixe.

15. Module fixe (24) selon la revendication 14, qui est un module émetteur-récepteur maître et secondaire à l'égard d'un autre module moins élaboré (22), auquel il peut être relié par l'interface interne de communication à courte portée.

16. Module selon l'une des revendications 7 à 15, dans lequel il est prévu des moyens applicatifs de téléphonie agencés pour, en cours de communication et via un lien à courte portée (1), coopérer avec des moyens applicatifs de téléphonie d'un autre module de communication d'élaboration différente et déterminer qu'une substitution d'accès est possible et/ou souhaitable.

17. Module selon la revendication 16, dans lequel, ayant acquis les paramètres d'une communication d'un autre module d'élaboration différente avec un réseau extérieur, les moyens applicatifs de téléphonie sont agencés pour émettre en superposition audit autre module avant de s'y substituer.

18. Module selon la revendication 17, dans lequel les moyens applicatifs de téléphonie sont agencés pour, afin de procéder à la substitution, émettre en superposition en TD/CDMA.
